# EUROPÄISCHE PATENTSCHRIFT

(11) **EP 0 930 504 B1**
(45) Veröffentlichungstag und Bekanntmachung des Hinweises auf die Patenterteilung: **27.09.2006**
(21) Anmeldenummer: 99100320.3
(22) Anmeldetag: 12.01.1999
(51) Int. Cl.: G01N 35/00, B01L 3/14, B23B 31/12

(54) **Deckelgreifvorrichtung**
Device for the gripping of a lid
Dispositif pour la prise d' un couvercle

(30) Priorität: 15.01.1998 DE 19801178
(43) Veröffentlichungstag der Anmeldung: 21.07.1999
(73) Patentinhaber: F.HOFFMANN-LA ROCHE AG, 4070 Basel (CH)
(72) Erfinder: Heimberg, Wolfgang, Dr., 85560 Ebersberg (DE)
(74) Vertreter: Ganahl, Bernhard

(56) Entgegenhaltungen:
- EP-A- 0 734 768
- EP-A- 0 734 769
- EP-A- 0 869 346
- WO-A-94/14073
- DE-A- 19 652 339
- DE-U- 29 720 432
- US-A- 4 552 278
- US-A- 5 846 489

## Beschreibung

Die Erfindung betrifft eine Deckelgreifvorrichtung nach dem Oberbegriff des Anspruchs 1 zum automatischen Handhaben von Deckeln für Probengefäße.

Derartige mit Deckel verschließbare Probengefäße werden in der Analytik im Gesundheitswesen, der Lebensmittelanalytik, der Umweltanalytik, der Molekularbiologie und weiteren Gebieten eingesetzt, bei welchen eine Kontamination von Probensubstanzen sicher vermieden werden muß. Derartige Gefäße und die entsprechenden Deckel sind z.B. aus der DE 44 12 286 A1, der EP 0 734 769 A1 und der EP 0 734 768 A1 bekannt.

Diese Deckel weisen einen zylinderförmigen Verschlußkörper mit einer Mantelwandung und einer Deckenwandung auf. An der Deckenwandung ist mittig ein vertikal abstehender Dorn angeordnet, an welchem der Deckel mit einer Deckelgreifvorrichtung gegriffen werden kann. Eine bekannte Deckelgreifvorrichtung (EP 0 734 769 A1, Fig. 7) weist ein Spannfutter zum Greifen des Dornes auf und funktioniert nach dem Prinzip eines Druckbleistiftes.

Die Deckelgreifvorrichtung weist ein rohrförmiges, vertikal angeordnetes Gehäuse auf, in welchem am unteren Ende eine nach unten vorstehende Hülse verschiebbar gelagert ist. In der Hülse ist das Spannfutter angeordnet, das von einem Ringelement umfaßt wird. Im Ringelement lagert das Spannfutter verschiebbar, wobei es sich öffnet, wenn es durch das Ringelement nach unten geschoben wird, bzw. schließt, wenn es im Ringelement nach oben geschoben wird.

Diese bekannte Deckelgreifvorrichtung funktioniert wie folgt:

Die Deckelgreifvorrichtung wird von oben mit der Hülse auf ein Probengefäß aufgesetzt. Eine an der Deckelgreifvorichtung ausgeübte und nach unten wirkende Druckkraft schiebt die Hülse in das Gehäuse bzw. senkt das Spannfutter zusammen mit dem Ringelement innerhalb der Hülse ab, so daß das Spannfutter am Dorn anliegt. Hierbei wird eine erste Feder gespannt, die einen ersten Druckpunkt ausübt.

Bei einem weiteren Druck von oben wird das Spannfutter gegen die Wirkung einer zweiten Feder nach unten durch das Ringelement verschoben, so daß es sich öffnet und sich über den Dorn schiebt.

Wenn ein zweiter Druckpunkt überwunden wird, vermindert ein Rastmechanismus durch eine Streckenverkürzung innerhalb der Deckelgreifvorichtung den nach unten ausgeübten Druck, wodurch das Spannfutter den Dorn greift. Da die zweite Feder weiterhin gespannt ist, wird das Ringelement nach unten gedrückt und das Spannfutter mit dem darin eingeklemmten Dorn zusammengedrückt. Durch Anheben der Deckelgreifvorrichtung kann nun der Deckel vom Probengefäß abgezogen werden.

Der Rastmechanismus ist ähnlich zu denjenigen in Kugelschreibern ausgebildet, die jeweils nach einem Druckpuls zwischen einer ausgedehnten bzw. zusammengedrückten Stellung verrasten.

Beim Aufsetzen des Deckels auf das Probengefäß geht der Rast-mechanismus wieder in seine ausgedehnte Stellung über, wodurch das Spannfutter nach unten durch das Ringelement geschoben wird, sich öffnet und den Dorn, bzw. den Deckel freigibt. Hierbei muß ein weiterer Druckpunkt überwunden werden.

Derartige Deckelgreifvorrichtungen sollen bei automatisch arbeitenden Robotern verwendet werden (Fig. 5 der DE 44 12 288 A1). Es hat sich jedoch gezeigt, daß die Einstellung der auszuübenden Kräfte, um den jeweiligen Druckpunkt zu überwinden schwierig ist. Eine Einstellung mit erheblichen Kraftüberschuß, die eine sichere Betätigung der Deckelgreifvorrichtung gewährleisten würde, ist zwar grundsätzlich möglich, führt jedoch auf Dauer zu einer erheblichen Belastung der Betätigungseinrichtung des Roboters und bei lang andauerndem Betrieb zu mechanischen Verzügen am Roboter, die wiederum durch zunehmende Ungenauigkeiten zu Fehlfunktionen beim Greifen bzw. Lösen der Deckel als auch bei den sonstigen Roboterfunktionen führen können.

Aus der CH 671 526 A5 geht eine Pipettiervorrichtung hervor, die eine Klemmzange mit zwei Zangenarmen aufweist, mit welcher Pipetten formschlüssig an ringförmigen Wülsten gegriffen werden können. Zum Lösen der Ineingriffnahme zwischen der Klemmzange und einer Pipette ist eine Spreizhülse vorgesehen, mit welcher die Klemmzange aufgespreizt werden kann, so daß die Pipette herausfällt. Eine solche mit einer Klemmzange, welche alleine durch die Klemmwirkung der Zangenarme die Pipette hält, versehene Pipettiervorrichtung ist als Greifvorrichtung zum automatischen Handhaben von Deckeln von Probengefäßen nicht geeignet, da die Deckel zum Teil sehr dicht schließen und dann nur mit großen Kräften von den Probengefäßen abgezogen werden können. Um derart hohe Kräfte aufzubringen, müßte die Klemmzange extrem steif ausgebildet sein, wodurch beim Greifvorgang entsprechend große Druckkräfte überwunden werden müssen. Es ist aber auch möglich, daß die Deckel sehr leicht abgezogen werden können, insbesondere, wenn die Deckel bereits oftmals von einem Probengefäß abgezogen und wieder aufgesetzt worden ist.

Zudem verschleißen bei der oftmaligen Handhabung der Deckel die Stifte zum Greifen der Deckel, wodurch ein formschlüssiges Greifen, wie es bei dieser bekannten Pipettiervorrichtung notwendig ist, nicht auf Dauer möglich ist.

Aus der EP 0 869 346 A2 geht ein Deckelgreifer hervor, der zwei vertikal angeordnete Greiffinger aufweist, die an ihrem unteren Ende jeweils mit einem zum anderen Greiffinger weisenden Vorsprung versehen sind. Diese Greiffinger können mittels eines Stellzylinders geöffnet und geschlossen werden, wobei beim Schließen ein Deckel im Bereich einer umlaufenden Nut mittels der an den unteren Enden der Greiffinger ausgebildeten Vorsprünge gegriffen werden kann. Weiterhin weist die Deckelgreifvorrichtung eine Deckeldrückeinrichtung auf, mit welcher ein Deckel mittels eines Stempels derart beaufschlagt werden kann, dass er in ein Gefäß zum Schließen desselben eingedrückt werden kann.

Aufgabe der Erfindung ist die Schaffung einer Deckelgreifvorrichtung zum automatischen Handhaben von Deckeln von Probengefäßen, die ein Spannfutter aufweist und nach dem Prinzip der Druckbleistifte arbeitet und für die Verwendung in einem Roboter geeignet ist.

Die Aufgabe wird durch eine Deckelgreifvorrichtung mit den Merkmalen des Anspruchs 1 gelöst. Vorteilhafte Ausgestaltungen sind in den Unteransprüchen angegeben.

Das Spannfutter der erfindungsgemäßen Deckelgreifvorrichtung kann aktiv geöffnet werden, wodurch ein Dorn eines Deckels ohne jegliche Druckkraft vom Spannfutter umfaßt und gegriffen werden kann.

Durch eine erneute Betätigung des Spannfutters kann der Deckel wieder von der Deckelgreifvorrichtung gelöst werden, wobei wiederum keinerlei Druckpunkt überwunden werden muß.

Zudem erlaubt das Vorsehen eines aktiv betätigten Spannfutters, daß ein Grundzustand, bei welchem kein Deckel gefaßt ist, und ein Greifzustand, bei welchem ein Deckel gefaßt ist, aufgrund der unterschiedlichen Stellungen des Spannfutters detektiert werden kann.

Die Erfindung wird beispielhaft anhand in den beigefügten Zeichnungen dargestellter Ausführungsbeispiele näher erläutert.
Es zeigen:

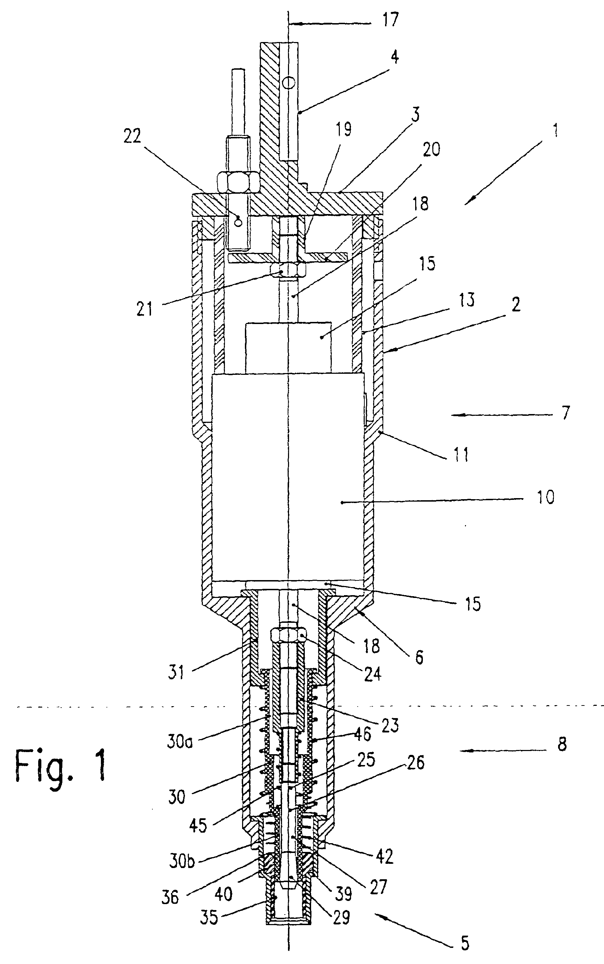

- Fig. 1: eine Deckelgreifvorrichtung im Querschnitt,
- Fig. 2: den freien Endbereich der sich im Grundzustand befindlichen Deckelgreifvorrichtung aus Fig. 1 im Querschnitt,
- Fig. 3: den freien Endbereich der sich im Greifzustand befindlichen Deckelgreifvorrichtung aus Fig. 1 im Querschnitt, und
- Fig. 4: den freien Endbereich im Greifzustand einer weiteren Deckelgreifvorrichtung im Querschnitt.

Die erfindungsgemäße Deckelgreifvorichtung 1 weist ein rohrförmiges Gehäuse 2 auf, das einendig mit einem Gehäusedeckel 3 verschlossen ist. Am Gehäusedeckel 3 ist ein nach außen vorstehender Befestigungszapfen 4 angeordnet, mit welchem die Deckelgreifvorrichtung 1 an einem Betätigungsarm eines Roboters befestigt werden kann. Ein solcher Roboter ist bspw. in der deutschen Gebrauchsmusteranmeldung DE 297 20 432.7 beschrieben.

Da die Deckelgreifvorrichtung 1 in der Regel mit dem Gehäusedeckel 3 nach oben weisend in einen Roboter eingesetzt wird, wird in der folgenden Beschreibung "oben" als in Richtung zum Gehäusedeckel 3 und "unten" als in Richtung zum freien, dem Gehäusedeckel 3 gegenüberliegenden Ende 5, weisend verwendet. Die erfindungsgemäße Deckelgreifvorrichtung 1 ist jedoch nicht auf diese Anordnung beschränkt; selbstverständlich kann sie auch horizontal oder mit dem freien Ende 5 nach oben weisend angeordnet sein.

Das Gehäuse 2 ist in Richtung zum freien Ende 5 der Deckelgreifvorrichtung ₁ stufenförmig verjüngt ausgebildet. Etwa nach 2/3 (ausgehend vom Deckel 3) der Länge des Gehäuses 2 ist eine Ringstufe 6 vorgesehen, die den Durchmesser des Gehäuses 2 auf etwa die Hälfte vermindert und die Deckelgreifvorrichtung in einen zwischen dem Deckel 3 und der Ringstufe 6 ausgebildeten Betätigungsbereich 7 und einen sich von der Ringstufe 6 zum freien Ende 5 erstreckenden Greifbereich 8 unterteilt.

Im relativ großvolumigen Betätigungsbereich 7 ist ein Elektromagnet 10 angeordnet. Der Magnet 10 weist eine hohlzylindrische Form auf und liegt mit seiner Mantelfläche formschlüssig am Gehäuse 2 im unteren Bereich des Betätigungsbereichs 7 an, der gegenüber dem oberen Bereich mit einer weiteren, kleinen Ringstufe 11 abgesetzt ist. Zwischen dem Magneten 10 und dem Deckel 3 ist eine Spannhülse 13 eingespannt, die den Magneten 10 von oben beaufschlagt und ihn in Richtung zur Ringstufe 6 drückt.

Der Magnet 10 weist eine einstückig am Magneten 10 ausgebildete Führungshülse 15 auf, die den hohlen Magneten 10 durchsetzt und sowohl unten als auch oben am Magneten 10 etwas vorsteht. Die Führungshülse 15 ist mit einer Bohrung versehen, die konzentrisch zu einer Längsachse 17 des Magneten 10 bzw. der gesamten Deckelgreifvorrichtung 1 ausgebildet ist.

In der Bohrung der Führungshülse 15 lagert eine entlang der Längsachse 17 verschiebbare Betätigungsstange 18, die an der Führungshülse 15 sowohl nach oben als auch nach unten vorsteht. Die Betätigungsstange 18 ist mit einem innerhalb des Magneten befindlichen Anker (nicht dargestellt) versehen, der beim Anlegen eines Stromes an den Magneten 10 die Betätigungsstange 18 nach unten bewegt.

Die Betätigungsstange 18 ist an ihren Endbereichen jeweils mit einem Gewindeabschnitt versehen. Am oberen Gewindeabschnitt ist ein rohrförmiger Anschlag 19 aufgeschraubt, der an seinem unteren Rand einen umlaufenden Steg 20 aufweist. Der Anschlag 19 ist durch eine Kontermutter 21 gesichert. Der Anschlag 19 schlägt beim Hub der Betätigungsstange 18 nach oben gegen den Gehäusedeckel 3 an und begrenzt hierdurch den maximalen Hub der Betätigungsstange 18. Durch Verstellen des Anschlages 19 an der Betätigungsstange 18 kann der maximale Hub entsprechend eingestellt werden.

Im Gehäusedeckel 3 ist ein Näherungssensor 22 eingesetzt, der den Steg 20 des Anschlages 19 detektiert, wenn dieser am Gehäusedeckel 3 anliegt. Anstelle eines Näherungssensors kann jeder beliebige andere Sensor verwendet werden, der geeignet ist, um das Anliegen des Anschlages 19 am Gehäusedeckel 3 bzw. einen Spalt zwischen dem Anschlag 19 und dem Gehäusedeckel 3 zu detektieren. Ein solcher Sensor kann bspw. als Lichtschranke ausgebildet sein, wobei es für solche Zwecke komplette Gabellichtschrankenelemente gibt.

Das untere Ende der Betätigungsstange 18 erstreckt sich bis in den Greifbereich 8. Auf den unteren Gewindeabschnitt der Betätigungsstange 18 ist eine Gewindehülse 23 aufgeschraubt und durch eine Kontermutter 24 gesichert. In die an der Betätigungsstange 18 nach unten vorstehende Gewindehülse 23 ist ein Spannfutter bzw. eine Zangenhülse 25 eingesetzt und festgeklemmt. Das Spannfutter 25 ist in axialer Verlängerung zur Betätigungsstange 18 und konzentrisch zur Längsachse 17 angeordnet. Das Spannfutter 25 ist ein von seinem unteren Ende nach oben mehrfach längsgeschlitztes Röhrchen, wobei vorzugsweise vier Schlitze 26 eingebracht sind, zwischen denen jeweils eine Zangenzunge 27 freigeschnitten ist. Am unteren Endbereich weisen die Zangenzungen 27 jeweils eine zum Ende hin zunehmende Materialstärke auf, so daß sich der Außenumfang des Spannfutters 25 entsprechend vergrößert und dieser zunehmend verbreiterte Bereich einen Keilklemmabschnitt 29 bildet.

Der untere Endbereich der Betätigungsstange 18 und des Spannfutters 25 sind innerhalb einer Zangenhülse 30 und einer Abstandshülse 31 angeordnet. Die Abstandshülse 31 weist an ihrem oberen Rand einen nach außen vorstehenden Ringsteg 32 und an ihrem unteren Rand einen nach innen vorstehen Ringsteg 33 auf. Der obere, nach außen vorstehende Ringsteg 32 hintergreift die Ringstufe 6 des Gehäuses 2 und ist zwischen der Ringstufe 6 und der Führungshülse 15 des Magneten 10 eingeklemmt. Die Abstandshülse 31 liegt mit ihrer Mantelwandung formschlüssig an der Innenwandung des Gehäuses 2 an.

Die Zangenhülse 30 weist einen oberen Abschnitt 30a mit größerem Durchmesser und einen unteren Klemmabschnitt 30b mit kleinerem Durchmesser auf. Am oberen Rand des oberen Abschnitts 30a ist ein nach außen vorstehender Ringsteg 30c ausgebildet. Der Klemmabschnitt 30b umschließt zumindest den Keilklemmabschnitt 29 des Spannfutters 25, wenn sich dieses in seiner oberen Stellung befindet, d.h. , wenn der Anschlag 19 am Gehäusedeckel 3 anliegt. Der Innendurchmesser des Klemmabschnitts 30b der Zangenhülse 30 entspricht dem Außendurchmesser des zusammengedrückten Keilklemmabschnittes 29 an seiner dicksten Stelle.

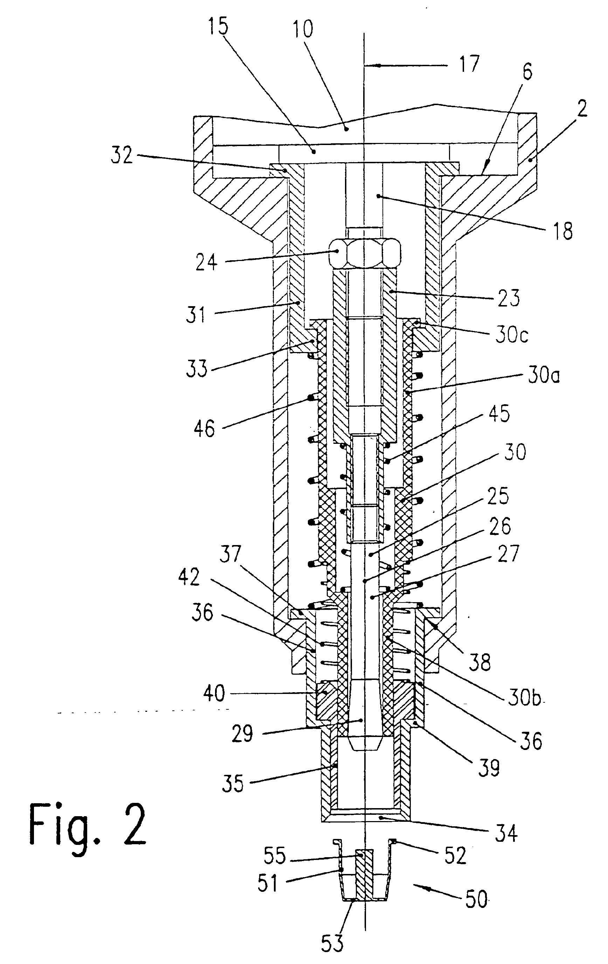

Das untere Ende der Zangenhülse 30 lagert in einer Abstreifhülse 35, die wiederum in einer Niederhalterhülse 36 angeordnet ist. Die Niederhalterhülse 36 weist an ihrem oberen Rand einen nach außen vorstehenden Ringsteg 37 auf, der eine Ringkante 38 am unteren Ende des Gehäuses 2 umgreift Fig. 2). Der untere Rand der Niederhalterhülse 36 ist stirnseitig zu einer Einfünrungsschräge 34 angefast.

Die Niederhalterhülse 36 liegt mit ihrer Mantelfläche formschlüssig am von der Ringkante 38 ein Stück nach unten vorstehenden Bereich des Gehäuses 2 an. Die Niederhalterhülse 36 weist etwa auf halber Höhe eine zweifach rechtwinklig abgewinkelte Ringstufe 39 auf, wobei der Bereich unterhalb der Ringstufe 39 einen kleineren Durchmesser als der Bereich oberhalb der Ringstufe aufweist.

Die Abstreifhülse 35 ist an ihrem oberen Rand mit einem nach außen vorstehenden Ringsteg 40 ausgebildet, der die Ringstufe 39 der Niederhalterhülse 36 hintergreift. Die Abstreifhülse 35 liegt mit ihrer Mantelfläche formschlüssig an der Innenfläche der Niederhalterhülse 36 im Bereich unterhalb der Ringstufe 39 an und ist in der Niederhalterhülse 36 vertikal verschiebbar gelagert.

Eine Abstreiffeder 42 ist zwischen dem Ringelement 40 der Abstreifhülse 35 und einer Ringkante 43 an der Zangenhülse 30 eingespannt, so daß die Abstreifhülse 35 mit ihrem Ringelement 40 gegen die Ringstufe 39 der Niederhalterhülse 36 gedrückt wird.

Eine Rückstellfeder 45 ist innerhalb der Zangenhülse 30 zwischen zwei an der Gewindehülse 23 und der Zangenhülse 30 ausgebildeten Ringkanten angeordnet, so daß die Zangenhülse 30 nach unten gedrückt wird und mit ihrem Ringsteg 30c in festem in-Eingriff mit dem unteren Ringsteg 33 der Abstandshülse 31 steht, bzw. die Gewindehülse 23 zusammen mit der Betätigungsstange 18 und dem Spannfutter 25 nach oben gegen den Gehäusedeckel 3 gedrückt wird.

In der zwischen der Zangenhülse 30 und dem Gehäuse 2 ist eine weitere Schraubenfeder, die Niederhalterfeder 46, vorgesehen, die zwischen dem unteren Ringsteg 33 der Abstandshülse 31 und dem Ringsteg 37 der Niederhalterhülse 36 eingespannt ist und die Niederhalterhülse 36 nach unten gegen die Ringkante 38 des Gehäuses 2 drückt.

Die Niederhalterfeder 46 ist derart dimensioniert, daß beim Niederdrücken der Deckelgreifvorrichtung 1 auf das den zu entnehmenden Deckel enthaltende Gefäß die von der Niederhalterhülse 36 ausgeübte Kraft größer als die Reibungskraft zwischen dem Deckel und dem Gefäß ist, so daß sichergestellt ist, daß beim Herausziehen des Deckels aus dem Gefäß das Gefäß nicht mit angehoben, sondern von der Niederhalterhülse 36 niedergehalten wird.

Nachfolgend wird die Funktionsweise der erfindungsgemäßen Dekkelgreifvorrichtung erläutert.

Die Deckelgreifvorrichtung 1 wird mit einer nach unten gerichteten Bewegung auf ein mit einem Deckel 50 verschlossenes Gefäß (nicht dargestellt) aufgesetzt. Der Deckel 50 weist eine Mantelwandung 51 auf, die am oberen Rand mit einem nach außen weisenden Ringsteg 52 versehen ist. Am unteren Rand der Mantelwandung 51 ist der Deckel 50 mit einer Bodenwandung 53 versehen. An der Bodenwandung 53 ist mittig ein nach oben vorstehender Dorn 55 angeordnet.

Beim Aufsetzen der Deckelgreifvorrichtung 1 auf den Deckel 50 wird dieser entlang der Einführungsschräge 34 in die Niederhalterhülse 36 eingeführt. Hierbei drückt der Ringsteg 52 des Deckels 50 die Abstreifhülse 35 gegen die Wirkung der Abstreiffeder 42 nach oben.

Befindet sich der Deckel 50 im Aufnahmebereich der Greifvorrichtung 1, d.h. im unteren Bereich der Niederhalterhülse 36, so wird der Elektromagnet 10 mit einem Strompuls angesteuert, wodurch die Betätigungsstange 18 nach unten geschoben wird. Hierbei wird das Spannfutter 25 mit seinem Klemmkeilabschnitt 29 nach unten aus der Zangenhülse 30 gefahren und öffnet sich, da es durch den Klemmabschnitt 30b nicht weiter eingeklemmt wird. Die Zangenzungen 27 umgreifen den Dorn 55 des Deckels 50.

Der Zeitpunkt, an dem der Strompuls zur Betätigung der Greifvorrichtung 1 angelegt wird, wird vom Roboter in Abhängigkeit von der Höhe des die Deckelgreifvorrichtung 1 tragenden Betätigungsarms des Roboters bestimmt.

Der Elektromagnet 10 wird stromlos geschaltet, wodurch die Betätigungsstange 18 zusammen mit der Gewindehülse 23 und dem Spannfutter 25 durch die Wirkung der Rückstellfeder 45 nach oben gedrückt wird. Hierbei wird das Spannfutter 25 in den Klemmabschnitt 30b eingezogen und die Zangenzungen 27 mit dem dazwischen befindlichen Dorn 55 zusammengedrückt. Der Dorn 55 wird durch einen Reibschluß mit den Zangenzungen 27 fest gegriffen und der Deckel 50 vollständig in den Aufnahmebereich der Deckelgreifvorrichtung 1 gezogen. Der Deckel 50 wird dann vom Gefäß durch Anheben der Deckelgreifvorrichtung vollständig abgezogen, wobei die Niederhalterhülse 36 das Gefäß niederhält und ein Anheben desselben vermeidet.

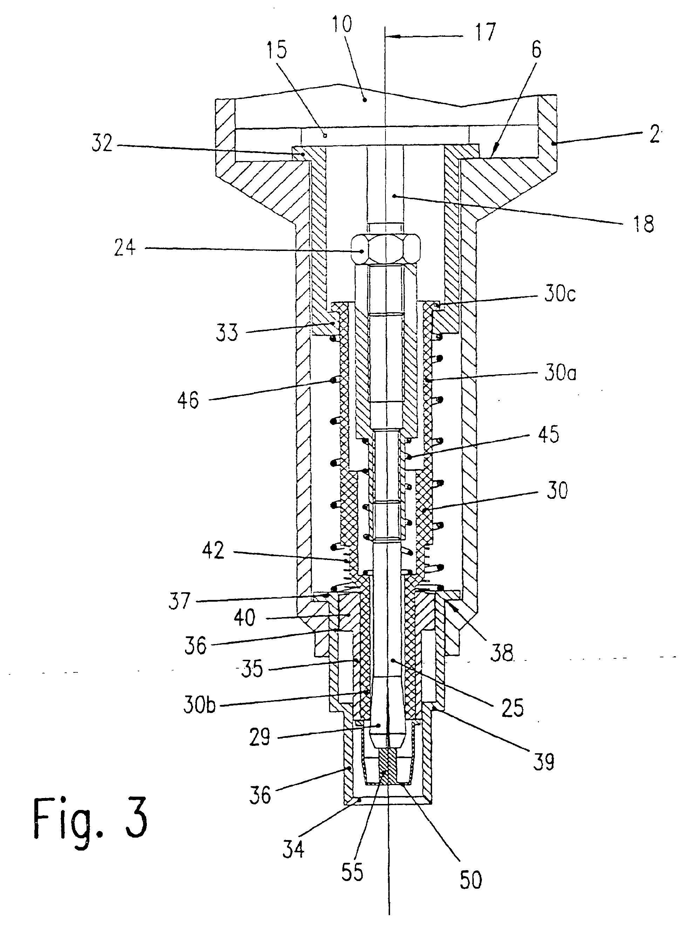

Die Deckelgreifvorrichtung 1 befindet sich dann in einem Greifzustand (Fig. 3), in welchem der Anschlag 19 mit Abstand zum Näherungssensor 22 angeordnet ist. Dieser Abstand wird vom Näherungssensor 22 wahrgenommen und als Greifzustand der Deckelgreifvorrichtung 1 detektiert.

Beim Schließen des Gefäßes wird die Deckelgreifvorrichtung 1 mit dem im Aufnahmebereich befindlichen Deckel 50 auf das Gefäß aufgesetzt, wobei der Deckel 50 mit seinen Mantelwandungen 51 in das rohrförmige Gefäß eingeschoben wird. Der Elektromagnet 10 wird mit einem Strompuls angesteuert, wodurch das Spannfutter 25 aus dem Klemmabschnitt 30b mit seinem Keilklemmabschnitt 29 ausfährt und sich öffnet. Hierdurch wird der Deckel 50 freigegeben. Die Deckelgreifvorrichtung wird dann mit stromführendem Elektromagneten 10 vom Gefäß abgezogen, wobei die Abstreifhülse 35 unter Wirkung der Abstreiffeder 42 den Deckel 50 aus dem Aufnahmebereich der Greifvorrichtung 1 schiebt.

Nach dem Abziehen der Deckelgreifvorrichtung 1 vom Gefäß wird der Elektromagnet 10 stromlos geschaltet, wodurch die Deckelgreifvorrichtung wieder in ihren Grundzustand (Fig, 1, 2) übergeht, in welchem der Anschlag 19 am Gehäusedeckel 3 anliegt. In diesem Grundzustand liegt der umlaufende Steg 20 des Anschlags 19 am Näherungssensor 22 an. Dies wird vom Näherungssensor 22 als Grundzustand detektiert.

Da das Greifen bei der erfindungsgemäßen Deckelgreifvorrichtung 1 aktiv von einem Stellelement (Magnet 10) ausgeführt wird, und nicht passiv über eine Ansteuerung mittels mehrerer Druckpunkte erfolgt, kann mit geringsten Roboterkräften ein Deckel auf einem Probengefäß aufgesetzt bzw. abgezogen werden. Zudem erlaubt die erfindungsgemäße Deckelgreifvorrichtung 1 die Überwachung des Grund- und Greifzustandes, so daß z.B. ein nicht korrekt erfolgter Greifvorgang detektiert und sofort wiederholt werden kann. Die Anzahl der maximalen Wiederholungen wird vorzugsweise auf einen bestimmten Wert festgelegt, so daß das Arbeitsprogramm des Roboters nicht durch einen Fehler beim Greifen eines Deckels (z.B. defekter Dorn, fehlender Deckel) aufgehalten wird.

Die Raumform des Aufnahmebereichs ist an den zu handhabenden Deckel anzupassen und die Erfindung ist deshalb nicht auf die Raumform des dargestellten Ausführungsbeispiels beschränkt. Wesentlich für die Erfindung ist, daß das Spannfutter aktiv von einem Stellelement betätigt wird, so daß die Aufnahme zusätzlicher Kräfte von außen nicht notwendig ist.

Die erfindungsgemäße Deckelgreifvorrichtung sieht somit zur Betätigung der Rückstellfeder 45, die die härteste der drei im Greifbereich 8 angeordneten Federn ist, das Stellelement in Form des Elektromagneten 10 vor. Hierdurch wird die vom Roboter aufzuwendende Kraft - zur Betätigung der Abstreiffeder 42 und der Niederhalterfeder 46 -erheblich vermindert.

Anstelle des Näherungssensors kann der Grund- und Greifzustand auch durch die Position der Betätigungsstange bzw. dessen Anker im Magneten aufgrund einer Induktivitätsänderung des Magneten detektiert werden.

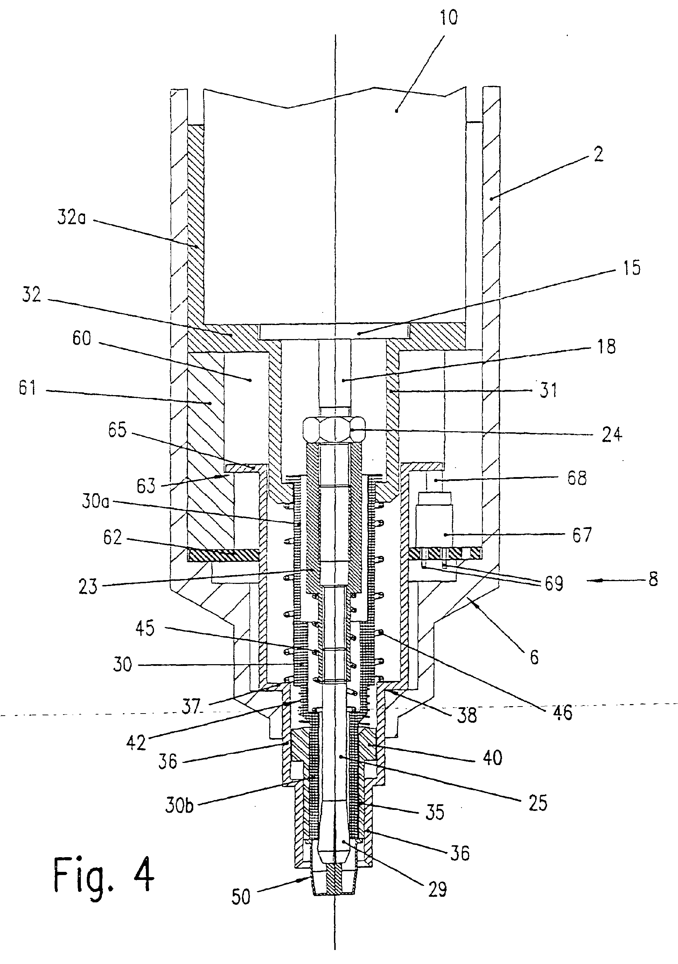

In Fig. 4 ist der freie Endbereich eines zweiten Ausführungsbeispiels einer Deckelgreifvorrichtung im Querschnitt dargestellt. Der Betätigungsbereich dieser Deckelgreifvorrichtung 1 ist identisch zu dem Betätigungsbereich 7 der oben beschriebenen Deckelgreifvorrichtung ausgebildet. Die beiden Deckelgreifvorrichtungen unterscheiden sich lediglich im Greifbereich 8. Da viele Teile der beiden Deckelgreifvorrichtungen übereinstimmen sind gleiche Teile mit gleichen Bezugszeichen bezeichnet.

Das zweite Ausführungsbeispiel der Deckelgreifvorrichtung 1 weist wiederum ein Gehäuse 2, einen Magneten 10, ein Spannfutter 25, das mittels einer Gewindehülse 23 an einer durch den Magneten betätigten Betätigungsstange 18 befestigt ist, eine Abstreifhülse 35, ein Niederhalterhülse 36, eine Zangenhülse 30 mit einem oberen Abschnitt 30a und einem Klemmabschnitt 30b, der mit dem Keilklemmabschnitt 29 des Spannfutters zusammenwirkt, eine Abstandshülse 31 und die entsprechenden Schraubenfedern (Abstreiffeder 42, Rückstellfeder 45, Niederhalterfeder 46) auf.

Beim zweiten Ausführungsbeispiel ist die Ringstufe 6, an welcher der Durchmesser des Gehäuses 2 etwa um die Hälfte vermindert wird, ungefähr auf halber Höhe im Greifbereich 8 angeordnet. Hierdurch wird zwischen der Unterkante des Magneten 10 und der Ringstufe 6 im Vergleich zum ersten Ausführungsbeispiel ein zusätzlicher Hohlraum 60 geschaffen. Zur Festlegung dieses Hohlraums 60 ist eine rohrförmige, vertikal geschlitzte Abstandsbuchse 61 vorgesehen, die an der Innenwandung des Gehäuses 2 anliegt. Der untere Rand der Abstandsbuchse 61 liegt auf einer Ringscheibe 62 auf, die wiederum auf der Ringstufe 6 des Gehäuses 2 aufsitzt. Der obere Rand der Abstandsbuchse 61 ist von der Abstandshülse 31 hintergriffen, deren Ringsteg 32 sich radial nach außen bis zur Innenwandung des Gehäuses 2 erstreckt. Die Abstandshülse 31 ist am äußeren Rand des Ringsceges 32 nach oben mit einem zylinderförmigen Hülsenabschnitt 32a verlängert, der den unteren Bereich des Magneten 10 umgreift und mit einem vertikalen Schlitz (in Fig. 4 rechts) versehen ist. An der Innenwandung der Abstandsbuchse 61 ist eine nach oben hinterschnittene Ringkante 63 herausgearbeitet.

Die Niederhalterhülse 36 hintergreift wiederum mit ihrem Ringsteg 37 die Ringkante 38 des Gehäuses 2, und ist vom Außenrand des Ringstegs 37 durch die Ringscheibe 62 hindurch nach oben in den Hohlraum 60 verlängert und an ihrem oberen Ende mit einem weiteren, radial nach außen vorstehenden Ringsteg 65 versehen, der die Ringkante 63 der Abstandsbuchse 61 hintergreift.

Zwischen der Ringscheibe 62 und dem Ringsteg 65 der Niederhalterhülse 36 ist angrenzend am Schlitzbereich der Abstandsbuchse ein Mikroschalter 67 angeordnet. Der Mikroschalter 67 weist ein Tastelement 68 auf, das vom Ringsteg 65 der Niederhalterhülse 36 betätigt wird. Die Ringscheibe 62 ist mit zwei vertikalen Durchgangsbohrungen versehen, in welchen zwei Anschlußstifte 69 des Mikroschalters 67 stecken. Die Anschlußstifte 69 sind elektrisch mit dem Stromkreis (nicht dargestellt) zur Anregung des Magneten 10 über eine Steuerlogik verbunden, die mittels eines Leistungstransistors den direkt den Magneten 10 ansteuert.

Ist die Niederhalterhülse 37 aufgrund der Wirkung der Niederhalterfeder 46 mit ihrem Ringsteg 37 nach unten gegen die Ringkante 38 bzw. mit ihrem Ringsteg 65 gegen die Ringkante 63 gedrückt, so ist das Tastelement 68 in den Mikroschalter 67 eingedrückt. Wird die Niederhalterhülse 36 gegen die Wirkung der Niederhalterfeder 46 nach oben geschoben, so wird das Tastelement 68 freigesetzt.

Der Mikroschalter 67 ist derart an die Steuerelektronik gekoppelt, daß bei eingedrücktem Tastelement 68 der Stromkreis zum Magneten 10 unterbrochen und bei freigesetztem Tastelement 68 der Stromkreis geschlossen ist. Der Mikroschalter 67 detektiert somit die Position der Niederhalterhülse 36 zur Ansteuerung des Magneten 10.

Die Funktionsweise dieser Deckelgreifvorrichtung entspricht im wesentlichen derjenigen des ersten Ausführungsbeispiels, wobei jedoch der Strompuls sowohl beim Öffnen als auch beim Schließen des Gefäßes durch den Mikroschalter 67 ausgelöst wird. Beim Öffnen des Gefäßes, d.h., beim Abziehen des Deckels 50 vom Gefäß, wird der Strompuls von der Steuereinrichtung etwa an der tiefsten Stellung der Deckelgreifvorrichtung über dem Gefäß unterbrochen. Beim Schließen des Gefäßes, d.h., beim Einsetzen des Deckels in das Gefäß, kann der den Magneten 10 erregende Strompuls lediglich mit dem Mikroschalter 67 angesteuert werden. Dies bedeutet, daß solange die Niederhalterhülse 36 in das Gehäuse 2 eingeschoben ist, wird der Magnet angeregt und das Spannfutter 25 nach unten geschoben, so daß ein vom Spannfutter festgehaltener Dorn 55 eines Deckels 50 freigegeben wird.

Diese Steuerung mittels des Mikroschalters erlaubt eine einfache Ansteuerung der Deckelgreifvorrichtung, wobei sie zudem unabhängig von der Höhe ist, in welcher die zu öffnenden bzw. zu schließenden Gefäße angeordnet sind.

Zudem erlaubt der Mikroschalter 67, daß erkannt werden kann, ob die Deckelgreifvorrichtung auf dem zu öffnenden bzw. zu schließenden Gefäß aufsitzt. Dies ist eine wesentliche Kontrollfunktion, die bei lang andauernden, vom Roboter auszuführenden Arbeitsprogrammen die Funktionssicherheit erhöht und einen wesentlichen Vorteil darstellt.

Ferner ist es möglich, daß erkannt werden kann, ob ein zu greifender Deckel 50 fehlt. Hierzu wird vom Sensor 22 nach einem oder mehreren Greifversuchen, mit welchen kein Deckel gegriffen werden konnte, nicht der Greif- sondern der Grundzustand festgestellt, und aus einem Deckelreservoir ein neuer Deckel 50 geholt. Hierauf wird versucht, diesen Deckel 50 in das Gefäß einzusetzen. Gelingt dies, so wird der neue Deckel als der dem Gefäß zugeordnete Deckel behandelt und das vom Roboter auszuführende Arbeitsprogramm läuft unverändert weiter. Sollte sich trotz fehlgeschlagener Greifversuche ein Deckel im Gefäß befinden, so kann der neue Deckel nicht in das Gefäß eingesetzt werden. Hierauf wird der neue Deckel wieder im Deckelreservoir abgelegt und eine Fehlermeldung ausgegeben.

Bei einem vereinfachten Verfahren ohne Deckelreservoir, wird nach einigen (z.B. 3 bis 5) Fehlversuchen beim Greifen eines Deckels der Roboter angehalten und eine Fehlermeldung ausgegeben. Der Benutzer kann dann wählen, ob der Roboter den "Fehler" ignorieren soll und unverändert sein Arbeitsprogramm abarbeitet, oder ob er den Roboter anhält.

Die Erfindung ist oben anhand eines Ausführungsbeispiels mit einem als Magneten ausgebildeten Stellelement erläutert. Die Erfindung ist jedoch nicht auf einen Magneten als Stellelement beschränkt; vielmehr kann das Stellelement auch Piezostellglied oder als Linearmotor oder ein beliebiges anderes Stellglied ausgebildet sein, das zur Ausführung einer Linearbewegung geeignet ist.

## Patentansprüche

1. Deckelgreifvorrichtung zum automatischen Handhaben von Deckeln (50) von Probengefässen, wobei die Deckel (50) einen von der Deckelgreifvorrichtung (1) zu greifenden Dorn (55) aufweisen, und die Deckelgreifvorrichtung (1) mit einem Spannfutter (25) zum Greifen des Dornes (55) eines Deckels (50) versehen ist, wobei das Spannfutter (25) einen Keilklemmabschnitt (29) aufweist und ein das Spannfutter (25) umschliessender und mit dem Keilklemmabschnitt (29) zusammenwirkender Klemmabschnitt (30b) vorhanden ist,
**dadurch gekennzeichnet, dass** die Deckelgreifvorrichtung (1) ein Stellelement (10) zum aktiven Betätigen des Spannfutters (25) aufweist.

2. Deckelgreifvorrichtung nach Anspruch 1,
**dadurch gekennzeichnet,**
**daß** der Keilklemmabschnitt (29) in einem Grundzustand der Deckelgreifvorrichtung (1) zusammengedrückt im Klemmabschnitt (30b) lagert, und in einem Öffnungs- bzw. Greifzustand der Deckelgreifvorrichtung ein Stück aus dem Klemmabschnitt (30b) bewegt ist, und
**daß** das Stellelement ein Elektromagnet (10) ist, der bei Stromführung das Spannfutter (25) mit seinem Keilklemmabschnitt (29) aus dem das Spannfutter (25) zusammenklemmenden Klemmabschnitt (30b) herausbewegt.

3. Deckelgreifvorrichtung nach Anspruch 2,
**dadurch gekennzeichnet,**
**daß** eine Rückstellfeder (45) vorgesehen ist, die derart angeordnet ist, daß das Spannfutter (25) mit seinem Keilklemmabschnitt (29) in den Klemmabschnitt (30b) gezogen wird.

4. Deckelgreifvorrichtung nach Ansprüche 2 bis 4,
**dadurch gekennzeichnet,**
**daß** ein Sensor (22) zum Detektieren des Grundzustandes, bei welchem kein Deckel (50) gefaßt ist, und des Greifzustandes, bei welchem ein Deckel (50) gefaßt ist, vorgesehen ist, wobei der Sensor z.B. ein Näherungssensor (22), eine Lichtschranke oder dergleichen ist, der den Ort eines zusammen mit dem Spannfutter (25) beweglichen Elementes (19) detektiert.

5. Deckelgreifvorrichtung nach Anspruch 4,
**dadurch gekennzeichnet,**
**daß** der Elektromagnet (10) zur Betätigung des Spannfutters (25) Bestandteil des Sensors ist.

6. Deckelgreifvorrichtung nach einem der Ansprüche 2 bis 5,
**dadurch gekennzeichnet,**
**daß** der Klemmabschnitt (30b) Bestandteil einer Zangenhülse (30) ist, in welcher die Rückstellfeder (45) angeordnet ist, so daß die Zangenhülse (30) in Richtung zum freien Ende (5) der Deckelgreifvorrichtung (1) und eine Einheit bestehend aus dem Spannfutter (25) und einer Betätigungsstange (18) vom freien Ende (5) weg beaufschlagt werden.

7. Deckelgreifvorrichtung nach einem der Ansprüche 1 bis 6,
**dadurch gekennzeichnet,**
**daß** die Deckelgreifvorrichtung (1) ein etwa rohrförmiges Gehäuse (2) aufweist,
wobei am zum freien Ende (5) der Deckelgreifvorichtung (1) weisenden Ende des Gehäuses (2) eine Niederhalterhülse (36) vorstehend angeordnet ist, wobei die Niederhalterhülse (36) gegen die Wirkung einer Niederhalterfeder (46) in das Gehäuse (2) verschiebbar ist.

8. Deckelgreifvorrichtung nach Anspruch 7,
**dadurch gekennzeichnet,**
**daß** ein Mikroschalter (67) zur Detektion der Stellung der Niederhalterhülse (36) vorgesehen ist, und
**daß** der Mikroschalter (67) in den Stromkreis des Elektromagneten geschaltet ist, wobei bei nicht in das Gehäuse (2) eingeschobener Stellung der Niederhalterhülse (36) der Stromkreis unterbrochen ist.

9. Deckelgreifvorichtung nach einem der Ansprüche 2 bis 8,
**dadurch gekennzeichnet,**
**daß** der Klemmabschnitt (30b) von einer Abstreifhülse (35) umgeben ist, die an dem Klemmabschnitt (30b) zum freien Ende (5) vorsteht und gegen die Wirkung einer Abstreiffeder (42) auf den Klemmabschnitt (30b) verschiebbar ist.

10. Roboter,
**gekennzeichnet durch**
eine Deckelgreifvorichtung nach einem der Ansprüche 1 bis 9.

11. Verfahren zum Ansteuern einer Deckelgreifvorrichtung nach einem der Ansprüche 1 bis 8 mittels eines Roboters,
**dadurch gekennzeichnet,**
**daß** zum Öffnen eines Gefäßes das Spannfutter (25) beim oder vor dem Aufsetzen der Deckelgreifvorrichtung auf das Gefäß betätigt wird, d.h., mit seinem Keilklemmabschnitt (29) aus dem Klemmabschnitt (30b) herausgedrückt wird, und bei aufgesetzter Deckelgreifvorrichtung die Betätigung des Spannfutters (25) aufgehoben wird, so daß das Spannfutter (25) einen Dorn (55) eines das Gefäß verschließenden Deckels (50) greift, und
zum Schließen eines Gefäßes die Deckelgreifvorichtung (1) zusammen mit einem Deckel (50) auf das Gefäß aufgesetzt wird, so daß der Deckel (50) in das Gefäß eingesetzt wird, wobei beim Aufsetzen der Deckelgreifvorrichtung (1) auf das Gefäß oder nachdem der Deckel (50) eingesetzt ist, das Spannfutter (25) betätigt wird und die Deckelgreifvorrichtung mit betätigtem Spannfutter (25) vom Gefäß abgenommen wird.

12. Verfahren nach Anspruch 11,
**dadurch gekennzeichnet,**
**daß** sowohl beim Öffnen als auch beim Schließen der Beginn der Betätigung des Spannfutters (25) durch einen in der Deckelgreifvorrichtung angeordneten Mikroschalter (67) ausgelöst wird.

13. Verfahren nach Anspruch 11 oder 12,
**dadurch gekennzeichnet,**
**daß** nach einem oder mehreren Greifversuchen, mit welchen kein Deckel gegriffen werden konnte, dies von einem Sensor (22) erkannt wird, und eine Fehlermeldung ausgegeben wird.

14. Verfahren nach Anspruch 11 oder 12,
**dadurch gekennzeichnet,**
**daß** nach einem oder mehreren Greifversuchen, mit welchen kein Deckel gegriffen werden konnte, dies von einem Sensor (22) erkannt wird, und aus einem Deckelreservoir ein weiterer Deckel (50) von der Deckelgreifvorichtung geholt wird,
wobei dieser Deckel (50) in das Gefäß eingesetzt wird, und falls das Einsetzen gelingen sollte,
der Deckel (50) dem Gefäß zugeordnet wird, und
falls das Einsetzen des Deckels nicht gelingen sollte, eine Fehlermeldung ausgegeben wird.

## Claims

1. A lid gripping device for automated handling lids (50) of sample vessels, the lids (50) comprising a spigot (55) to be grasped by said lid gripping device (1), and
said lid gripping device (1) is provided with a collet chuck (25) for grasping said spigot (55) of a lid (50),
wherein
said collet chuck (25) comprises a wedge clamping section (29) and a wedge damping section (30b) is provided enclosing said collet chuck (25) and cooperating with a wedge clamping section (29), and
**characterised in that**
said lid gripping device (1) comprises a positioning element (10) for actively actuating said collet chuck (25).

2. The lid gripping device as set forth in claim 1
**characterised in that**
said wedge clamping section (29) which in a standby condition of said lid gripping device (1) is mounted contracted in a clamping section (30b) and in an opening or gripping condition of said lid gripping device is moved partly from said clamping section (30b), and
said positioning element is a solenoid (10) which in the ON condition moves said collet chuck (25) with its wedge clamping section (29) from said clamping section (30b) contracting said collet chuck (25).

3. The lid gripping device as set forth in claim 2
**characterised in that**
a return spring (45) is provided arranged such that said collet chuck (25) is drawn into said clamping section (29) by its wedge clamping section (30b).

4. The lid gripping device as set forth in any of the claims 2 to 4
**characterised in that**
a sensor (22) is provided for detecting said standby condition in which no lid (50) is grasped and for detecting said gripping condition in which a lid (50) is grasped,
said sensor is e.g. a proximity sensor (22), a photocell or the like detecting the location of an element (19) moving together with said collet chuck (25).

5. The lid gripping device as set forth in claim 4
**characterised in that**
said solenoid (10) for actuating said collet chuck (25) is a component of said sensor.

6. The lid gripping device as set forth in any of the claims 2 to 5
**characterised in that**
said clamping section (30b) is a component of a collet (30) in which said return spring (45) is arranged so that said collet (30) is urged in the direction of the free end (5) of said lid gripping device (1) and a unit consisting of said collet chuck (25) and an actuating rod (18) is urged away from said free end (5).

7. The lid gripping device as set forth in any of the claims 1 to 6
**characterised in that**
said lid gripping device (1) comprises a roughly tubular housing (2), at the end (5) of which facing said free end of said lid gripping device (1) a hold-down sleeve (36) is arranged protrudingly, said hold-down sleeve (36) being shiftable into said housing (2) against the action of a hold-down spring (46).

8. The lid gripping device as set forth in claim 7
**characterised in that**
a microwswitch (67) is provided to detect the position of said hold-down sleeve (36);
said microwswitch (67) is including in the circuit of said solenoid, said circuit being opened in the position of said hold-down sleeve (36) not being shifted into said housing (2).

9. The lid gripping device as set forth in any of the claims 2 to 8
**characterised in that**
said clamping section (30b) is surrounded by a sweeper sleeve (35) protruding from said clamping section (30b) in the direction of said free end (5) and shiftable onto said clamping section (30b) against the action of a sweeper spring (42).

10. A robotic device
**characterised by**
a lid gripping device as set forth in any of the claims 1 to 9.

11. A method of signaling a lid gripping device as set forth in any of the claims 1 to 8 by means of a robotic device
**characterised by** the steps of
- in opening a vessel - actuating said collet chuck (25) on or prior to mounting said lid gripping device on said vessel, i.e. urging its wedge clamping section (29) from said clamping section (30b), and cancelling said actuation of said collet chuck (25) with said lid gripping device in place so that said collet chuck (25) grasps a spigot (55) of a lid (50) closing off said vessel, and
- in closing a vessel - mounting said lid gripping device (1) together with said lid (50) on said vessel so that said lid (50) is inserted in said vessel, and
actuating said collet chuck (25) and removing said lid gripping device (1) by said actuated collet chuck (25) from said vessel with said lid gripping device (1) mounted on said vessel or after said lid (50) has been inserted.

12. The method as set forth in claim 11
**characterised in that**
in both opening and closing, the commencement of actuation of said collet chuck (25) is activated by a microwswitch (67) arranged in said lid gripping device.

13. The method as set forth in claim 11 or 12
**characterised in that**
after one or more gripping attempts in which no lid could be grasped, this is detected by a sensor (22) and an alarm is output.

14. The method as set forth in claim 11 or 12
**characterised in that**
after one or more gripping attempts in which no lid could be grasped, this is detected by a sensor (22) and a further lid (50) is picked by said lid gripping device from said lid reservoir,
this lid (50) being inserted in said vessel, and when this has been successful,
said lid (50) is assigned to said vessel and
should this fail to be successful an alarm is output.

## Revendications

1. Dispositif de prise de couvercle en vue de la manipulation automatique de couvercles (50) de récipients à échantillons, le couvercle (50) comprenant une broche (55) destinée à être prise par le dispositif de prise de couvercle (1), et le dispositif de prise de couvercle (1) est pourvu d'un mandrin de serrage (25) pour saisir la broche (55) d'un couvercle (50), dans lequel le mandrin de serrage (25) comprend un tronçon de blocage en coin (29) et il est prévu un tronçon de blocage (30b) qui entoure le mandrin de serrage (25) et qui coopère avec le tronçon de blocage en coin (29),
**caractérisé en ce que** le dispositif de prise de couvercle (1) comprend un élément de positionnement (10) pour l'actionnement actif du mandrin de serrage (25).

2. Dispositif de prise de couvercle selon la revendication 1,
**caractérisé en ce que**
le tronçon de blocage en coin (29) est rangé, dans un état de base du dispositif de prise de couvercle (1), de manière écrasée dans le tronçon de blocage (30b) et, dans un état d'ouverture ou respectivement de prise du dispositif de prise de couvercle, il est déplacé d'une petite distance hors du tronçon de blocage (30b), et
**en ce que** l'élément de positionnement est un électroaimant (10) qui, lors de l'alimentation en courant, déplace le mandrin de serrage (25) avec son tronçon en de blocage en coin (29) hors du tronçon de blocage (30b) qui écrase le mandrin de serrage (25).

3. Dispositif de prise de couvercle selon la revendication 2,
**caractérisé en ce que**
il est prévu un ressort de rappel (25) qui est agencé de telle manière que le mandrin de serrage (25) est tiré avec son tronçon de blocage en coin (29) dans le tronçon de blocage (30b).

4. Dispositif de prise de couvercle selon les revendications 2 à 4,
**caractérisé en ce qu'**il est prévu un capteur (22) pour détecter l'état de base, dans lequel aucun couvercle (50) n'est pris, et l'état de prise, dans lequel un couvercle (50) est pris, ledit capteur étant par exemple un capteur de proximité (22), une barrière lumineuse, ou similaire, qui détecte l'emplacement d'un élément (19) mobile conjointement avec le mandrin de serrage (25).

5. Dispositif de prise de couvercle selon la revendication 4,
**caractérisé en ce que** l'électroaimant (10) pour actionner le mandrin de serrage (25) fait partie du capteur.

6. Dispositif de prise de couvercle selon l'une des revendications 2 à 5,
**caractérisé en ce que** le tronçon de blocage (30b) fait partie d'une douille-pince (30) dans laquelle est agencé le ressort de rappel (45), de sorte que la douille-pince (30) est repoussée en direction de l'extrémité libre (5) du dispositif de prise de couvercle (1), et une unité constituée du mandrin de serrage (25) et d'une tige d'actionnement (18) est repoussée en éloignement de l'extrémité libre (5).

7. Dispositif de prise de couvercle selon l'une des revendications 1 à 6,
**caractérisé en ce que** le dispositif de prise de couvercle (1) comporte un boîtier approximativement tubulaire (2), tel qu'une douille de maintien vers le bas (36) est agencée en dépassement à l'extrémité du boîtier (2) qui est tournée vers l'extrémité libre (5) du dispositif de prise de couvercle (1), ladite douille de maintien vers le bas (36) étant déplaçable dans le boîtier (2) à l'encontre de l'effet d'un ressort de maintien vers le bas (46).

8. Dispositif de prise de couvercle selon la revendication 7, **caractérisé en ce qu'**il est prévu un micro-rupteur (67) pour la détection de la position de la douille de maintien vers le bas (36), et **en ce que** le micro-rupteur (76) est branché dans le circuit électrique de l'électroaimant, de sorte que lorsque la douille de maintien vers le bas (36) n'est pas en position introduite dans le boîtier (2), le circuit électrique est interrompu.

9. Dispositif de prise de couvercle selon l'une des revendications 2 à 8,
**caractérisé en ce que** le tronçon de blocage (30b) est entouré par un manchon de raclage (35) qui dépasse au niveau du tronçon de blocage (30b) vers l'extrémité libre (5), et peut être déplacé vers le tronçon de blocage (30b) à l'encontre de l'effet d'un ressort de raclage (42).

10. Automate, **caractérisé par** un dispositif de prise de couvercle selon l'une des revendications 1 à 9.

11. Procédé pour le pilotage d'un dispositif de prise de couvercle selon l'une des revendications 1 à 8 au moyen d'un automate,
**caractérisé en ce que**
pour ouvrir un récipient, le mandrin de serrage (25) est actionné lors de la pose ou avant la pose du dispositif de prise de couvercle sur le récipient, c'est-à-dire que son tronçon en de blocage en coin (29) est repoussé hors du tronçon de blocage (30b), et lorsque le dispositif de prise de couvercle est posé, l'actionnement du mandrin de serrage (25) est annulé de sorte que le mandrin de serrage (25) saisit une broche (55) d'un couvercle (50) qui referme le récipient, et
pour fermer un récipient, le dispositif de prise de couvercle (1) est posé sur le récipient conjointement avec un couvercle (50) de sorte que le couvercle (50) est mis en place dans le récipient, et dans lequel lors de la pose du dispositif de prise de couvercle (1) sur le récipient, ou après la pose du couvercle (50), le mandrin de serrage (25) est actionné, et le dispositif de prise de couvercle avec mandrin de serrage actionné (25) est enlevé du récipient.

12. Procédé selon la revendication 11, **caractérisé en ce que**, aussi bien lors de l'ouverture que lors de la fermeture, le commencement de l'actionnement du mandrin de serrage (25) est déclenché par un micro-rupteur (67) agencé dans le dispositif de prise de couvercle.

13. Procédé selon la revendication 11 ou 12, **caractérisé en ce que**, après une ou plusieurs tentatives de prise lors desquelles aucun couvercle n'a pu être pris, cette situation est reconnue par un capteur (22), et une information d'erreur est délivrée.

14. Procédé selon la revendication 11 ou 12, et **caractérisé en ce que** après une ou plusieurs tentatives de prise lors desquelles aucun couvercle n'a pu être pris, cette situation est reconnue par un capteur (22) et un autre couvercle (50) est prélevé par le dispositif de prise de couvercle depuis un réservoir de couvercles,
ce couvercle (50) est mis en place dans le récipient et,
si cette mise en place réussit, le couvercle (50) est associé au réceptacle, et
si la mise en place du couvercle ne réussit pas, une information d'erreur est délivrée.
